# EUROPEAN PATENT APPLICATION

(11) **EP 4 664 670 A1**
(43) Date of publication of application: **17.12.2025**
(21) Application number: 24875716.3
(22) Date of filing: 10.10.2024
(51) Int. Cl.: H01M 50/609, H01M 50/673

(54) **ELECTROLYTE INJECTION SYSTEM AND ELECTROLYTE INJECTION METHOD**

(30) Priority: 16.04.2024 CN 202410452923
(71) Applicant: Contemporary Amperex Technology Co., Limited, Jiaocheng District Ningde Fujian 352100 (CN)
(72) Inventor: LIAO, Hongyan, Ningde Fujian 352100 (CN); ZHANG, Jian, Ningde Fujian 352100 (CN); GUAN, Feng, Ningde Fujian 352100 (CN)
(74) Representative: Lorenz Seidler Gossel Part. mbB
(86) International application number: PCT/CN2024/123905
(87) International publication number: WO 2025/218124

(57) **Abstract**

Disclosed are a liquid injection system (100) and a liquid injection method. The liquid injection system (100) includes a rotary device (1), a liquid injection device, a liquid preparation mechanism (3), a loading and unloading station (4), a liquid replenishment buffer station (5), a transfer mechanism, a first weighing device (61), a second weighing device (62) and control equipment. The rotary device (1) is provided with a plurality of battery (200) placement positions arranged in a circumferential direction and able to achieve rotational displacement. The liquid injection device is disposed on each battery (200) placement position, and each liquid injection device is configured to inject a liquid into a battery (200) on the corresponding battery (200) placement position. The liquid preparation mechanism (3) is configured to prepare a liquid for the liquid injection device passing through a liquid preparation area of the liquid preparation mechanism (3). The loading and unloading station (4) is configured to place batteries (200) to be subjected to liquid injection and batteries (200) after liquid injection. The liquid replenishment buffer station (5) is configured to buffer batteries (200) to be subjected to liquid replenishment. The transfer mechanism is configured to move the batteries (200). The first weighing device (61) is configured to weigh the batteries (200) after liquid injection. The second weighing device (62) is configured to weigh the batteries (200) to be subjected to liquid injection.

## Description

### CROSS-REFERENCE TO RELATED APPLICATIONS

The present disclosure is filed based on and claims priority to Chinese patent application No. 202410452923.4, filed on April 16, 2024 and entitled "LIQUID INJECTION SYSTEM AND LIQUID INJECTION METHOD", which is incorporated herein by reference in its entirety.

### TECHNICAL FIELD

The present disclosure relates to the technical field of battery production equipment, in particular to a liquid injection system and a liquid injection method.

### BACKGROUND

This section is intended to provide a background or context to implementations of the present disclosure. The description here is not considered to be an acknowledgement of the prior art as it is included in this section.

In a production process, batteries usually require processes such as liquid injection and sealing. The liquid injection process refers to injecting an electrolyte solution into the batteries through liquid injection holes formed in the batteries. In the related art, liquid injection equipment has problems of low degree of automation, low production efficiency and high labor cost.

### SUMMARY OF THE INVENTION

In view of this, embodiments of the present disclosure are expected to provide a liquid injection system and a liquid injection method, which can improve a degree of automation and production efficiency and reduce labor cost.

To achieve the above objective, a first aspect of embodiments of the present disclosure provides a liquid injection system, including:
a rotary device, provided with a plurality of battery placement positions arranged in a circumferential direction and able to achieve rotational displacement, wherein the battery placement positions are used to place batteries, and each of the battery placement positions sequentially passes through a feeding and discharging position, a liquid preparation position, and at least one static buffer position and returns to the feeding and discharging position through rotational displacement;
a liquid injection device, wherein each of the battery placement positions is equipped with the liquid injection device, and the liquid injection device is configured to inject a liquid into the batteries placed at the battery placement positions;
a liquid preparation mechanism, disposed on a circumferential outer side of the rotary device, wherein the liquid preparation mechanism is configured to prepare a liquid for the liquid injection device equipped at the battery placement position located at the liquid preparation position;
a loading and unloading station, disposed on the circumferential outer side of the rotary device, wherein the loading and unloading station is configured to place batteries to be subjected to liquid injection and batteries after liquid injection;
a liquid replenishment buffer station, configured to buffer batteries to be subjected to liquid replenishment;
a transfer mechanism, configured to move the batteries after liquid injection from the battery placement positions located at the feeding and discharging position to the loading and unloading station, and to move the batteries to be subjected to liquid injection from the loading and unloading station to the battery placement positions located at the feeding and discharging position, or to move the batteries to be subjected to liquid replenishment from the liquid replenishment buffer station to the battery placement positions located at the feeding and discharging position;
a first weighing device, configured to weigh the batteries after liquid injection;
a second weighing device, configured to weigh the batteries to be subjected to liquid injection; and
control equipment, configured to control the second weighing device to weigh the batteries to be subjected to liquid injection, then control the transfer mechanism to move the batteries to be subjected to liquid injection located at the loading and unloading station to the battery placement positions located at the feeding and discharging position, control the rotary device to make the battery placement positions be in rotational displacement, control the liquid preparation mechanism to prepare a liquid for the liquid injection devices equipped at the battery placement positions that are displaced to the liquid preparation positions, control the liquid injection device after liquid preparation to inject a liquid to the batteries at the battery placement positions before the battery placement positions rotate back to the feeding and discharging position, control the transfer mechanism to move the batteries after liquid injection that rotate back to the feeding and discharging position from the battery placement positions to the loading and unloading station, then control the first weighing device to weigh the batteries after liquid injection, and further control, after weighing and after the batteries to be subjected to liquid replenishment are transferred to the liquid replenishment buffer station, the transfer mechanism to move the batteries to be subjected to liquid replenishment from the liquid replenishment buffer station to the battery placement positions located at the feeding and discharging position and having no batteries being placed.

According to the liquid injection system of the embodiment of the present disclosure, on the one hand, the control equipment controls the transfer mechanism to move the batteries to be subjected to liquid injection from the loading and unloading station to the battery placement positions or move the batteries to be subjected to liquid replenishment from the liquid replenishment buffer station to the battery placement positions, then controls the rotary device to rotate the battery placement positions carrying the batteries, and controls the liquid preparation mechanism to prepare the liquid for the liquid injection device to realize automatic liquid preparation. After the automatic liquid preparation is completed, the liquid injection device is controlled to complete liquid injection of the batteries at the battery placement positions before the batteries rotate back to the loading and unloading station, thereby realizing fully-automatic liquid injection of the batteries, improving a degree of automation of liquid injection of the batteries, improving production efficiency, and reducing labor cost. On the other hand, by disposing the first weighing device for weighing the batteries after liquid injection, and transferring the weighed batteries to be subjected to liquid replenishment to the liquid replenishment buffer station, thus automatic liquid replenishment of the batteries may further be achieved while increasing a yield rate, thereby further improving the degree of automation of liquid injection of the batteries.

In some implementations, the liquid injection system includes a loading detection device, the control equipment can control the loading detection device to detect batteries passing through a detection area of the loading detection device, the loading detection device includes a second weighing device, the second weighing device is configured to weigh batteries to be subjected to liquid injection that pass through a weighing area of the second weighing device, and for the same battery, in a case where a difference value between the weight of the battery after liquid injection weighed by the first weighing device and the weight of the battery to be subjected to liquid injection weighed by the second weighing device does not reach a specified amount, the control equipment controls a robot to transfer the battery to the liquid replenishment buffer station.

In this embodiment, the loading detection device is disposed to detect the batteries passing through the detection area of the loading detection device, which is helpful to timely find out whether the batteries to be subjected to liquid injection are qualified, thereby improving the production efficiency of the batteries. The second weighing device is used to automatically weigh the batteries, that is, weight of the batteries before liquid injection may be obtained, and then the batteries after liquid injection are weighed by the first weighing device. The same battery is weighed by the first weighing device and the second weighing device, and the weight of the battery after liquid injection weighed by the first weighing device is subtracted from the weight of the battery before liquid injection weighed by the second weighing device to obtain the liquid injection amount of the battery, thereby confirming whether the liquid injection amount of the battery meets the standard.

In some implementations, the liquid injection system includes a robot, a loading pull belt with a taking position, and an unloading pull belt with an unloading position, the loading detection device is disposed on one side of the loading pull belt, and the control equipment controls the robot to transfer qualified batteries from the taking position to the loading and unloading station, and transfer the batteries after liquid injection from the loading and unloading station to the unloading position.

Exemplarily, the robot is a six-axis robot. Compared with loading and unloading on a coordinate axis, the six-axis robot has high flexibility and is more stable and reliable in a transfer process. By disposing the robot to transfer the qualified batteries from the taking position to the loading and unloading station and transfer the batteries after liquid injection from the loading and unloading station to the unloading position, it is beneficial to realize automatic operation of a machine and reduce the labor cost.

In some implementations, the loading detection device further includes a first code scanning device, and the control equipment controls the first code scanning device to perform code scanning on batteries passing through a code scanning area of the first code scanning device.

The first code scanning device is used to perform automatic code scanning on the batteries, which is helpful to identify and bind information of the batteries, so as to realize tracking record of the batteries in a whole liquid injection process and improve the reliability of the liquid injection.

In some implementations, the loading detection device further includes a short-circuit testing device, and the control equipment controls the short-circuit testing device to perform short-circuit testing on batteries passing through a short-circuit testing area of the short-circuit testing device.

The short-circuit testing device is used to perform automatic short-circuit testing on the batteries, which is helpful to timely pick out batteries with a problem of internal short circuit before liquid injection, improve a problem of defective products flowing to a terminal, and increase the yield rate of the batteries.

In some implementations, the liquid injection system includes a loading buffer pull belt, and the control equipment controls the robot to transfer batteries that have been detected as unqualified by the loading detection device to the loading buffer pull belt.

The loading buffer pull belt is used to buffer unqualified batteries. There is no need to stop a line for treatment, nor will it cause the problem of the defective products flowing to the terminal, which is conducive to improving the degree of automation and the production efficiency.

In some implementations, the liquid injection system includes a loading pairing station, the control equipment controls the robot to transfer a battery pack that has been detected as unqualified by the loading detection device to the loading pairing station, the unqualified battery pack includes at least one unqualified battery, and the control equipment can control the robot to transfer the unqualified batteries at the loading pairing station to the loading buffer pull belt, and transfer qualified batteries at the loading pairing station to the loading and unloading station.

In this embodiment, by disposing the loading pairing station, when the robot grabs the batteries and when there are defective products, the robot transfers the battery pack including the unqualified batteries to the loading pairing station, and then puts the defective products in the battery pack into the loading buffer pull belt. In a case where the entire battery pack is qualified, the entire battery pack is put in a liquid injection fixture. When the number of batteries at the loading pairing station meets the single-grabbing number of the robot, the robot gives priority to grabbing the batteries of the pairing mechanism and putting them in the liquid injection fixture, which is beneficial to vacating the loading pairing station and is beneficial to improving the efficiency of the robot in filling the liquid injection fixture.

In some implementations, the liquid injection system includes an unloading detection device, the unloading detection device includes a first weighing device disposed on one side of the unloading pull belt and a second code scanning device disposed on one side of the unloading pull belt, and the control equipment controls the second code scanning device to scan the batteries passing through a code scanning area of the second code scanning device.

The second code scanning device is used to perform automatic code scanning on the batteries after liquid injection, which is helpful to identify and bind information of the batteries after liquid injection, so as to realize tracking record of the batteries in a whole liquid injection process and improve the reliability of the liquid injection.

In some implementations, the liquid injection system includes an unloading buffer pull belt, and the control equipment controls the robot to transfer batteries that have been detected as unqualified by the unloading detection device to the unloading buffer pull belt.

The unloading buffer pull belt is used to buffer unqualified batteries after liquid injection. There is no need to stop a line for treatment, nor will it cause the problem of the defective products flowing to the terminal, which is conducive to improving the degree of automation and the production efficiency.

In some implementations, the liquid injection system includes an unloading pairing station, the control equipment controls the robot to transfer a battery pack that has been detected as unqualified by the unloading detection device to the unloading pairing station, the unqualified battery pack includes at least one unqualified battery, and the control equipment controls the robot to transfer the batteries to be subjected to liquid replenishment from the unloading pairing station to the liquid replenishment buffer station, transfer the unqualified batteries except for the batteries to be subjected to liquid replenishment to the unloading buffer pull belt, and transfer qualified batteries at the unloading pairing station to the unloading pull belt.

In this embodiment, by disposing the unloading pairing station, when the robot grabs the batteries and when there are defective products, the robot transfers the battery pack including the unqualified batteries to the unloading pairing station, transfers the batteries to be subjected to liquid replenishment in the battery pack to the liquid replenishment buffer station, and then transfers the unqualified batteries (for example, products with poor code scanning or batteries with excess liquid after liquid injection) except for the batteries to be subjected to liquid replenishment in the battery pack to the unloading buffer pull belt. When the number of batteries at the unloading pairing station meets the single-grabbing number of the robot, the robot gives priority to grabbing the batteries at the unloading pairing station and putting them in an unloading pull line, which is beneficial to vacating the unloading pairing station and is beneficial to improving grabbing efficiency of the robot. When the number of batteries at the liquid replenishment buffer station meets the single-grabbing number of the robot, the robot gives priority to grabbing the batteries at the liquid replenishment buffer station and putting them in the liquid injection fixture at the battery placement positions.

In some implementations, the liquid injection system includes a cleaning device disposed on one side of the unloading pull belt, and the control equipment is able to control the cleaning device to clean batteries passing through a cleaning area of the cleaning device.

The control equipment can control the cleaning device to wipe a liquid injection port for the batteries passing through the cleaning area of the cleaning device to wipe off electrolyte solution residues outside the liquid injection port.

In some implementations, the liquid injection system includes a liquid injection fixture, the liquid injection fixture is configured to accommodate the batteries to be subjected to liquid injection or the batteries to be subjected to liquid replenishment or the batteries after liquid injection, and the transfer mechanism is used to move the liquid injection fixture accommodating the batteries to be subjected to liquid injection or to be subjected to liquid replenishment to the battery placement positions, or to move the liquid injection fixture accommodating the batteries after liquid injection from the battery placement positions to the loading and unloading station.

The liquid injection fixture refers to a structure used to accommodate the batteries and able to position the batteries. In a liquid injection process, a receiving tank of the liquid injection fixture is used to bear the batteries, and different mechanisms of the liquid injection system perform different treatments on the batteries. The different batteries may require different liquid injection fixtures. Therefore, for different types of batteries, different liquid injection fixtures may be replaced to bear the batteries.

In some implementations, the liquid injection system includes at least two rotary devices.

This helps to improve the liquid injection efficiency of the batteries. Moreover, the two rotary devices may share the loading pull belt, the unloading pull belt and the robot, which reduces the number of parts and reduces costs while improving the liquid injection efficiency.

In some implementations, the rotary device includes at least two static buffer positions, and all the static buffer positions are disposed in a circumferential direction of the rotary device at intervals.

This helps to improve the liquid injection efficiency of the batteries and increase production takt.

In some embodiments, the liquid injection system includes a residual liquid receiving mechanism disposed on a circumferential outer side of the rotary device, each of the battery placement positions sequentially passes through the feeding and discharging position, the liquid preparation position, at least one static buffer position and a residual liquid receiving position and returns to the feeding and discharging position through rotational displacement, and the control equipment controls the residual liquid receiving mechanism to clean an electrolyte solution residual in a liquid injection cup of the liquid injection device for the battery placement positions located at the residual liquid receiving position.

This can improve the problem of inaccurate liquid injection amount of the next round of batteries due to the electrolyte solution residual in the liquid injection cup. In addition, the residual liquid receiving mechanism may also be used to contain the residual electrolyte solution, which can improve a problem of electrolyte solution dripping onto the outside of the residual liquid receiving mechanism, and is conducive to maintaining cleanliness and hygiene.

In some implementations, the liquid injection system includes at least two rotary devices, and the liquid replenishment buffer station is disposed between the at least two rotary devices.

This facilitates the two rotary devices to share the liquid replenishment buffer station.

In some implementations, the liquid injection system includes at least two rotary devices, and the robot is located between the at least two rotary devices and located between the liquid replenishment buffer station and the unloading pull belt; and an arrangement direction of the loading pull belt and the unloading pull belt is the same as an arrangement direction of at least two rotary devices, and the loading pull belt and the unloading pull belt are located on the same side of the at least two rotary devices.

This makes it easier for the robot to carry out transportation using a shorter moving path and also facilitates sharing of the robot.

A second aspect of embodiments of the present disclosure provides a liquid injection method, applied to a liquid injection system for injecting a liquid to a battery, wherein the liquid injection system includes control equipment, a rotary device, a liquid injection device, a liquid preparation mechanism, a loading and unloading station, a liquid replenishment buffer station, a transfer mechanism, a first weighing device and a second weighing device, the rotary device is provided with a plurality of static station battery placement positions arranged in a circumferential direction and able to achieve rotational displacement, the battery placement positions are used to place batteries, each of the battery placement positions sequentially passes through a feeding and discharging position, a liquid preparation position, at least one static buffer position and returns to the feeding and discharging position through rotational displacement, and the liquid injection method includes:
controlling, by the control equipment, the second weighing device to weigh batteries to be subjected to liquid injection; controlling, by the control equipment, the transfer mechanism to transfer the batteries to be subjected to liquid injection at the loading and unloading station or batteries to be subjected to liquid replenishment at the liquid replenishment buffer station to the battery placement positions of the rotary device;
controlling, by the control equipment, the rotary device to rotate the battery placement positions, and controlling, by the control equipment in response to the batteries to be subjected to liquid injection or the batteries to be subjected to liquid replenishment moving to the liquid preparation position, the liquid preparation mechanism to prepare a liquid for the liquid injection device equipped by the battery placement positions located at the liquid preparation position and controlling the liquid injection device to vacuumize the batteries;
controlling, by the control equipment in response to the completion of liquid preparation, the rotary device to rotate the battery placement positions, and controlling the liquid injection device to inject the liquid into the batteries before the battery placement positions rotate back to the feeding and discharging position; and
controlling, by the control equipment in response to the completion of the liquid injection, the first weighing device to weigh batteries after liquid injection and moved out of the battery placement positions, and transfer the weighed batteries to be subjected to liquid replenishment to the liquid replenishment buffer station.

According to the liquid injection method of the embodiment of the present disclosure, on the one hand, the control equipment controls the transfer mechanism to move the batteries to be subjected to liquid injection from the loading and unloading station to the battery placement positions or move the batteries to be subjected to liquid replenishment from the liquid replenishment buffer station to the battery placement positions, then controls the rotary device to rotate the battery placement positions carrying the batteries, and controls the liquid preparation mechanism to prepare the liquid for the liquid injection device to realize automatic liquid preparation. After the automatic liquid preparation is completed, the liquid injection device is controlled to perform liquid injection on the batteries at the battery placement positions before the batteries return from the battery placement positions to the feeding and discharging position, thereby realizing fully-automatic liquid injection of the batteries, improving a degree of automation of liquid injection of the batteries, improving production efficiency, and reducing labor cost. On the other hand, by disposing the first weighing device for weighing the batteries after liquid injection, and transferring the weighed batteries to be subjected to liquid replenishment to the liquid replenishment buffer station, thus automatic liquid replenishment of the batteries may further be achieved while increasing a yield rate, thereby further improving the degree of automation of liquid injection of the batteries.

In some implementations, the liquid injection system includes a loading pull belt, a loading buffer pull belt and a loading detection device disposed on one side of the loading pull belt, and before controlling, by the control equipment, the transfer mechanism to transfer the batteries to be subjected to liquid injection at the loading and unloading station or the batteries to be subjected to liquid replenishment at the liquid replenishment buffer station to the battery placement positions of the rotary device, the method includes:
controlling, by the control equipment, the loading pull belt to convey the batteries to be subjected to liquid injection; and
controlling, by the control equipment, the loading detection device to detect batteries passing through a detection area of the loading detection device, transfer batteries qualified for detection to the loading and unloading station, and transfer batteries unqualified for detection to the loading buffer pull belt.

In some implementations, the liquid injection system includes a loading pairing station, and transferring the batteries qualified for the detection to the loading and unloading station, and transferring the batteries unqualified for the detection to the loading buffer pull belt includes:
transferring, by the control equipment, battery packs qualified for the detection to the loading and unloading station, and transferring battery packs unqualified for the detection to the loading pairing station, wherein the unqualified battery packs include at least one unqualified battery; and
transferring, by the control equipment, the batteries unqualified for the detection at the loading pairing station to the loading buffer pull belt, and transferring, by the control equipment if the number of the batteries qualified for the detection at the loading pairing station reaches the preset number, the preset number of batteries to the loading and unloading station.

In some implementations, controlling, by the control equipment, the loading detection device to detect the batteries passing through the detection area of the loading detection device includes:
the loading detection device including a second weighing device, and controlling, by the control equipment, the second weighing device to weigh batteries passing through a weighing area of the second weighing device; and/or
the loading detection device including a short-circuit testing device, and controlling, by the control equipment, the short-circuit testing device to perform short-circuit testing on batteries passing through a short-circuit testing area of the short-circuit testing device; and/or
the loading detection device including a first code scanning device, and controlling, by the control equipment, the first code scanning device to perform code scanning on batteries passing through a code scanning area of the first code scanning device.

### DESCRIPTION OF DRAWINGS

FIG. 1 is a schematic structural diagram of a liquid injection system according to an embodiment of the present disclosure;
FIG. 2 is a schematic structural diagram of a liquid injection fixture according to an embodiment of the present disclosure;
FIG. 3 is a schematic diagram of an implementation process of a liquid injection method provided by an embodiment of the present disclosure;

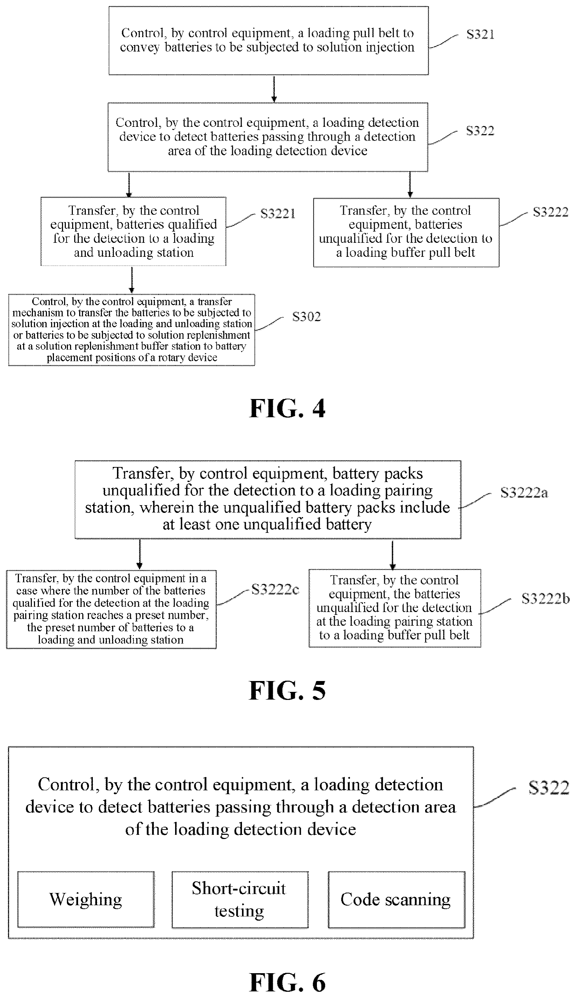

FIG. 4 is a schematic diagram of another implementation process of a liquid injection method provided by an embodiment of the present disclosure;
FIG. 5 is a schematic diagram of yet another implementation process of a liquid injection method provided by an embodiment of the present disclosure; and
FIG. 6 is a schematic diagram of still another implementation process of a liquid injection method provided by an embodiment of the present disclosure.

### Description of reference numerals

1. Rotary device; 1a. Battery placement position; 10a. Feeding and discharging position; 10b. liquid preparation position; 10c. Static buffer position; 10d. residual liquid receiving position; 2. liquid injection fixture; 2a. Receiving tank; 3. liquid preparation mechanism; 4. Loading and unloading station; 5. liquid replenishment buffer station; 6. Unloading detection device; 61. First weighing device; 62. Second code scanning device; 7. Loading detection device; 71. First code scanning device; 72. Second weighing device; 73. Short-circuit testing device; 8. Robot; 9. Loading pull belt; 9a. Taking position; 11. Unloading pull belt; 11a. Unloading position; 12. Loading buffer pull belt; 13. loading pairing station; 14. Unloading buffer pull belt; 15. Unloading pairing station; 16. Cleaning device; 17. residual liquid receiving mechanism; 100. liquid injection system; and 200. Battery.

### DETAILED DESCRIPTION

It should be noted that, where there is no conflict, the embodiments in the present disclosure and the technical features in the embodiments may be combined with each other. The detailed descriptions in the Detailed Description section should be understood as interpretive explanations of the purpose of the present disclosure and should not be regarded as undue limitations on the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variants thereof in the present disclosure are intended to cover non-exclusive inclusion.

In the description of the embodiments of the present disclosure, the technical terms "first", "second", and the like are used only to distinguish between different objects, and cannot be understood as indicating or implying a relative importance or implicitly specifying the number, particular order, or primary and secondary relation of the technical features indicated. In the description of the examples of the present disclosure, the meaning of "plurality of" is two or more, unless otherwise expressly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, the technical terms "length", "width", "thickness", "upper", "lower", "front", "rear", "left", "right", "vertical", "horizontal", "top", "bottom", "inner", "outer", "circumferential," "height direction," "first direction," "second direction", and the like indicate orientations or positional relationships based on the orientations or positional relationships shown in the drawings, and are intended only to facilitate and simplify the description of the embodiments of the present disclosure, and are not intended to indicate or imply that the device or element referred to must have a particular orientation, or be constructed, operated, or used in a particular orientation, and therefore should not be construed as limitation of the embodiments of the present disclosure.

In the description of the embodiments of the present disclosure, unless otherwise explicitly specified and defined, the technical terms such as "mount", "connect", "connection" and "fix" should be understood in a broad sense. For example, the connection may be fixed connection, detachable connection or integrated connection, may be mechanical connection or electrical connection, or may be direct connection, indirect connection through an intermediate, internal communication between two elements or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects that have little or no interaction force, or contact between two objects that have interaction force.

With the development of clean energy, more and more equipment use electrical energy as driving energy, and thus power batteries that can store more electrical energy and can be charged and discharged multiple times have developed rapidly, such as lithium-ion batteries. The power batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace.

The batteries mentioned in the embodiments of the present disclosure are used to form a battery device, and the battery device includes one or more battery cells to provide a single physical module with a higher voltage and capacity. For example, the battery device mentioned in the present disclosure may include a battery module, a battery pack, or the like. The battery device generally includes a box body for packaging one or more battery cells. The box body can prevent liquid or other foreign matters from affecting charging or unloading of the battery cells.

The battery cell in the present disclosure may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present disclosure. The battery cell may be a cylinder, a rectangular solid, or in other shapes, which is also not limited in the embodiments of the present disclosure.

The battery cell includes an electrode assembly and an electrolyte solution, the electrode assembly is composed of a positive electrode plate, a negative electrode plate and a separator, and the electrolyte solution plays a role in conducting ions between the positive electrode plate and the negative electrode plate. The battery cell works mainly relying on movement of metal ions between the positive electrode plate and the negative electrode plate. The positive electrode plate includes a positive electrode current collector and a positive electrode active material layer, the positive electrode active material layer is coated on a surface of the positive electrode current collector, the positive electrode current collector which is not coated with the positive electrode active material layer protrudes from the positive electrode current collector coated with the positive electrode active material layer, and the positive electrode current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. The parts, not coated with the negative electrode active material layer, of the negative electrode current collector protrude from the part, coated with the negative electrode active material layer, of the negative electrode current collector, and the parts, not coated with the negative electrode active material layer, of the negative electrode current collector serve as negative tabs. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The material of the separator may be, for example, polypropylene (PP) or polyethylene (PE).

The battery cell further includes an insulating film and a shell. The insulating film wraps the outside of the electrode assembly. The shell encapsulates the electrode assembly covered with the insulating film to form the battery cell. The insulating film may be a mylar film, and the shell may be an aluminum shell. After the electrode assembly is rolled and formed, the mylar film and the shell are packaged through a Mylar wrapping process and a shelling process. The mylar film plays a role in sealing and protecting the electrode assembly, and the mylar film can effectively insulate the electrode assembly from the shell to avoid short circuit within the battery cell. The shell plays a protective role.

After the shelling process, a liquid injection process of injecting an electrolyte solution into the shell is usually performed. The liquid injection process is an important step in a battery manufacturing process. liquid injection accuracy is directly related to cycle performance and consistency of lithium ions. In the related art, liquid injection equipment has problems of low degree of automation, low production efficiency and high labor cost. It should be noted that the batteries in the liquid injection process may be an intermediate state before forming a finished battery cell in the battery device.

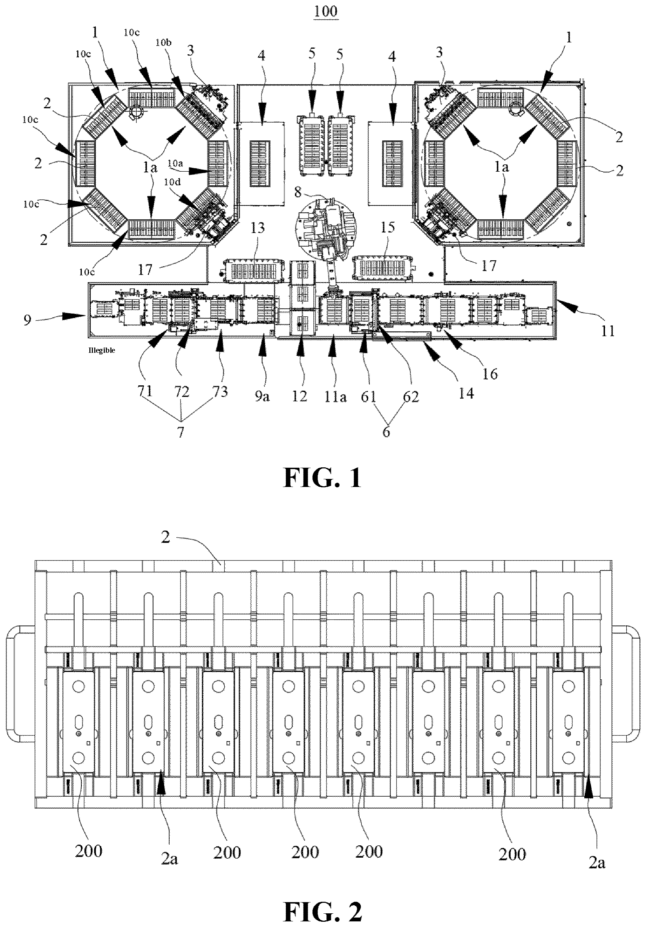

In order to improve the degree of automation and the production efficiency and reduce the labor cost, please refer to FIG. 1 and FIG. 2, an embodiment of the present disclosure provides a liquid injection system for injecting a liquid into a battery 200. The liquid injection system 100 includes a rotary device 1, a liquid injection device, a liquid preparation mechanism 3, a loading and unloading station 4, a liquid replenishment buffer station 5, a transfer mechanism, a first weighing device 61, a second weighing device 72 and control equipment. The rotary device 1 is provided with a plurality of battery placement positions 1a, the plurality of battery placement positions 1a are arranged in a circumferential direction and able to achieve rotational displacement, and the battery placement positions 1a are used to place batteries 200. Each of the battery placement positions 1a sequentially passes through a feeding and discharging position 10a, a liquid preparation position 10b, and at least one static buffer position 10c and returns to the feeding and discharging position 10a through rotational displacement. Each battery placement position 1a is equipped with the liquid injection device, and the liquid injection device is configured to inject a liquid into the batteries 200 placed on the battery placement position 1a. The liquid preparation mechanism 3 is disposed on a circumferential outer side of the rotary device 1, and the liquid preparation mechanism 3 is configured to prepare a liquid for the liquid injection device (i.e., the liquid injection device passing through a liquid preparation area of the liquid preparation mechanism 3) equipped at the battery placement position 1a located at the liquid preparation position. The loading and unloading station 4 is disposed on the circumferential outer side of the rotary device 1, and the loading and unloading station 4 is configured to place batteries 200 to be subjected to liquid injection and batteries 200 after liquid injection. The liquid replenishment buffer station 5 is configured to buffer batteries 200 to be subjected to liquid replenishment. The transfer mechanism is configured to move the batteries 200 after liquid injection from the battery placement positions 1a located at the feeding and discharging position 10a to the loading and unloading station 4, and to move the batteries 200 to be subjected to liquid injection from the loading and unloading station 4 to the battery placement positions 1a located at the feeding and discharging position 10a, or to move the batteries 200 to be subjected to liquid replenishment from the liquid replenishment buffer station 5 to the battery placement positions 1a located at the feeding and discharging position 10a. The second weighing device 72 is configured to weigh the batteries 200 to be subjected to liquid injection. The first weighing device 61 is configured to weigh the batteries 200 after liquid injection. The control equipment is configured to control the second weighing device 72 to weigh the batteries to be subjected to liquid injection, then control the transfer mechanism to move the batteries 200 to be subjected to liquid injection located at the loading and unloading station 4 to the battery placement positions 1a located at the feeding and discharging position 10a, control the rotary device 1 to make the battery placement positions 1a to be in rotational displacement, control the liquid preparation mechanism 3 to prepare a liquid for the liquid injection devices equipped at the battery placement positions 1a that are displaced to the liquid preparation positions 10b, and control the liquid injection device after liquid preparation to inject a liquid to the batteries 200 at the battery placement positions 1a before the battery placement positions 1a rotate back to the feeding and discharging position 10a. The control equipment controls the transfer mechanism to move the batteries 200 after liquid injection that rotate back to the feeding and discharging position 10a from the battery placement positions 1a to the loading and unloading station 4, then control the first weighing device 61 to weigh the batteries 200 after liquid injection, and further control, after weighing and after the batteries 200 to be subjected to liquid replenishment are transferred to the liquid replenishment buffer station 5, the transfer mechanism to move the batteries 200 to be subjected to liquid replenishment from the liquid replenishment buffer station 5 to the battery placement positions 1a located at the feeding and discharging position 10a and having no batteries 200 being placed.

Exemplarily, the rotary device 1 is provided with at least two battery placement positions (static stations) 1a, all the battery placement positions 1a are disposed in the circumferential direction of the rotary device 1 at intervals, and the battery placement positions 1a are configured to install a liquid injection fixture 2 for accommodating the batteries 200, so as to perform steps such as vacuuming and still standing on the batteries 200 on the liquid injection fixture 2. All the battery placement positions 1a are disposed in the circumferential direction of the rotary device 1 at intervals. In this way, the rotary device 1 may drive the liquid injection fixture 2 in the battery placement positions 1a to turn in the circumferential direction of the rotary device 1 to realize the scheduling of the battery placement positions 1a, thereby performing different steps and finally completing the liquid injection.

The fact that the rotary device 1 is provided with at least two battery placement positions 1a means that the number of the battery placement positions 1a is two or more. Exemplarily, the number of the battery placement positions 1a may be 2, 3, 4, 5, 6, 7, 8, 9, 10, 11, 12 or 13, etc.

By disposing at least two battery placement positions 1a, while the loading and unloading station 4 performs feeding and discharging, liquid preparation, vacuuming and still standing of the batteries 200, the liquid injection devices located on the remaining battery placement positions 1a may inject the liquid into the batteries 200, for example, perform cyclic liquid injection on the batteries 200 by utilizing positive and negative pressures, which is conducive to the full absorption of the electrolyte solution, saving time and improving the production efficiency. Here, for the sake of convenience of explanation, a position where the battery placement positions 1a are located during feeding and discharging of the batteries 200 on the battery placement positions may be called the feeding and discharging position, a position where the battery placement positions 1a are located when the liquid injection devices on the battery placement positions are able to inject the liquid (including vacuuming) may be called the liquid preparation position, and a position where the battery placement positions 1a rotate through after passing the liquid preparation position may be called the static buffer position.

In some specific embodiments, each battery placement position 1a may be configured such that when one of the battery placement positions 1a is located at the feeding and discharging position 10a, the other battery placement positions 1a are respectively located at the liquid preparation position 10b and the static buffer position 10c.

It should be noted that the "a plurality of" mentioned in the embodiments of the present disclosure refers to the number of two or more than two.

In some other embodiments, the number of the rotary device 1 may be one.

In some embodiments, referring to FIG. 1 and FIG. 2, the liquid injection system 100 includes a liquid injection fixture 2. The liquid injection fixture 2 is configured to accommodate the batteries 200 to be subjected to liquid injection or to be subjected to liquid replenishment, and the transfer mechanism is used to move the liquid injection fixture 2 accommodating the batteries 200 to be subjected to liquid injection or to be subjected to liquid replenishment to the battery placement positions 1a. The liquid injection fixture 2 may also accommodate the batteries 200 after liquid injection, and is used to move the batteries after liquid injection from the battery placement positions to the loading and unloading station 4. The battery placement positions 1a may be positions for placing the liquid injection fixture 2.

The liquid injection fixture 2 refers to a structure used to accommodate the batteries 200 and able to position the batteries 200. In a liquid injection process, a receiving tank 2a of the liquid injection fixture 2 is used to bear the batteries 200, and different mechanisms of the liquid injection system 100 perform different treatments on the batteries 200. The different batteries 200 may require different liquid injection fixtures 2. Therefore, for different types of batteries 200, different liquid injection fixtures 2 may be replaced to bear the batteries 200.

Exemplarily, the rotary device 1 includes a mounting bracket, a turntable rotatably disposed on the mounting bracket, and a driving member for driving the turntable to rotate. In some embodiments, the rotary device 1 is also called a turret.

Here, the turntable is driven by the driving member to rotate horizontally, and a rotation direction of the turntable may be counterclockwise or clockwise. The battery placement positions 1a may be positions on the turntable where the batteries can be placed (the batteries are placed by the liquid injection fixture 2 ). The turntable is driven to rotate by the driving member, so that the battery placement positions 1a of the rotary device 1 rotate.

Exemplarily, the driving member is, for example, a motor.

Exemplarily, each battery placement position 1a is provided with a corresponding liquid injection device, and the liquid injection device is used to inject the liquid into the battery 200 on the corresponding battery placement position 1a. At this time, the battery placement positions 1a are located at the liquid preparation position.

The liquid preparation mechanism 3 is configured to prepare the liquid for the liquid injection device passing through the liquid preparation area of the liquid preparation mechanism 3. Exemplarily, the control equipment controls the battery placement position 1a where the batteries 200 to be subjected to liquid injection are placed to rotate to the liquid preparation position. The liquid injection device corresponding to the battery placement position 1a is located in the liquid preparation area. The control equipment controls the liquid preparation mechanism 3 to inject a certain amount of electrolyte solution into a liquid injection cup of the liquid injection device, and the liquid injection cup is used to inject the liquid into the batteries 200. Exemplarily, the liquid injection device may utilize positive and negative pressures for cyclic liquid injection.

The loading and unloading station 4 is configured to place the batteries 200 to be subjected to liquid injection and the batteries 200 after liquid injection, that is, the loading and unloading station 4 is used to place the liquid injection fixture 2, and the liquid injection fixture 2 is used to accommodate the batteries 200 to be subjected to liquid injection or the batteries 200 to be subjected to liquid replenishment, or, is used to place the liquid injection fixture 2 accommodating the batteries 200 after liquid injection.

Optionally, the liquid injection system includes an unloading detection device 6, and the unloading detection device 6 is used to detect the batteries 200 after liquid injection to detect whether the batteries 200 are qualified.

Please refer to FIG. 1, the first weighing device 61 is configured to weigh the batteries 200 after liquid injection, so as to confirm whether the liquid injection amount of the batteries 200 meets the standard. If there is less liquid, the unqualified batteries 200 are transferred to the liquid replenishment buffer station 5. If there is more liquid, the unqualified batteries 200 are transferred to the unloading buffer pull belt 14. If the liquid injection amount meets the standard, the qualified batteries 200 are conveyed to the next process, thereby realizing automatic liquid replenishment of the batteries 200.

Optionally, the first weighing device 61 may be equipped in the unloading detection device 6. It should be noted that the specific structure of the first weighing device 61 is not limited here, as long as it can automatically weigh the batteries 200.

According to the liquid injection system of the embodiment of the present disclosure, on the one hand, the control equipment controls the transfer mechanism to move the batteries 200 to be subjected to liquid injection from the loading and unloading station 4 to the battery placement positions 1a or move the batteries 200 to be subjected to liquid replenishment from the liquid replenishment buffer station 5 to the battery placement positions 1a, then controls the rotary device 1 to rotate, and controls the liquid preparation mechanism 3 to prepare the liquid for the liquid injection device to realize automatic liquid preparation. After the automatic liquid preparation is completed, the liquid injection device is controlled to complete liquid injection of the batteries 200 at the battery placement positions 1a before the batteries rotate back to the loading and unloading station, thereby realizing fully-automatic liquid injection of the batteries 200, improving a degree of automation of liquid injection of the batteries 200, improving production efficiency, and reducing labor cost. On the other hand, by disposing the first weighing device 61 for weighing the batteries 200 after liquid injection, and transferring the weighed batteries 200 to be subjected to liquid replenishment to the liquid replenishment buffer station 5, thus automatic liquid replenishment of the batteries 200 may further be achieved while increasing a yield rate, thereby further improving the degree of automation of liquid injection of the batteries 200.

In some embodiments, referring to FIG. 1 and FIG. 2, the liquid injection system 100 includes a robot 8, a loading pull belt 9 having a taking position 9a, and an unloading pull belt 11 having an unloading position 11a. The control equipment can control the robot 8 to transfer the qualified batteries 200 at the taking position 9a to the loading and unloading station 4, and transfer the batteries 200 after liquid injection at the loading and unloading station 4 to the unloading position 11a.

It should be noted that the specific type and position of the robot 8 are not limited here, as long as it can transfer the qualified batteries 200 at the taking position 9a to the loading and unloading station 4, and transfer the batteries 200 after liquid injection at the loading and unloading station 4 to the unloading position 11a. Of course, the robot 8 may also have other functions.

Here, the loading pull belt 9 is used to load the batteries 200. Exemplarily, the loading pull belt 9 includes a first end and a second end in a conveying direction. The first end of the loading pull belt 9 is a feeding end, and the second end of the loading pull belt 9 is the taking position 9a. The batteries 200 to be subjected to liquid injection enter from the feeding end, and the loading pull belt 9 conveys the batteries 200 to be subjected to liquid injection to the taking position 9a.

Here, the unloading pull belt 11 is used to unload the batteries 200. Exemplarily, the unloading pull belt 11 includes a first end and a second end in the conveying direction. The first end of the unloading pull belt 11 is the unloading position 11a, and the second end of the unloading pull belt 11 is a discharging end. The batteries 200 after liquid injection enter from the unloading position 11a, and the unloading pull belt 11 conveys the batteries 200 after liquid injection to the discharging end.

Please refer to FIG. 1 and FIG. 2, the robot 8 transfers the qualified batteries 200 at the taking position 9a to the loading and unloading station 4, for example, transferring the qualified batteries 200 at the taking position 9a to the liquid injection fixture 2 on the loading and unloading station 4. The robot transfers the batteries 200 after liquid injection on the loading and unloading station 4 to the unloading position 11a, for example, transferring the batteries 200 after liquid injection on the loading and unloading station 4 to the liquid injection fixture 2 on the unloading position 11a.

Exemplarily, the robot 8 is a six-axis robot 8. Compared with loading and unloading on a coordinate axis, the six-axis robot 8 has high flexibility and is more stable and reliable in a transfer process. By disposing the robot 8 to transfer the qualified batteries 200 from the taking position 9a to the loading and unloading station 4 and transfer the batteries 200 after liquid injection from the loading and unloading station 4 to the unloading position 11a, it is beneficial to realize automatic operation of a machine and reduce the labor cost.

In some embodiments, referring to FIG. 1, the liquid injection system 100 includes a loading detection device 7 disposed on one side of the loading pull belt 9. The control equipment can control the loading detection device 7 to detect the batteries 200 passing through a detection area of the loading detection device 7.

In this embodiment, the loading detection device 7 is disposed to detect the batteries 200 passing through the detection area of the loading detection device 7, which is helpful to timely find out whether the batteries 200 to be subjected to liquid injection are qualified, thereby improving the production efficiency of the batteries 200.

In some embodiments, referring to FIG. 1, the loading detection device 7 includes a first code scanning device 71. The control equipment can control the first code scanning device 71 to perform code scanning on batteries 200 passing through a code scanning area of the first code scanning device 71.

It should be noted that the specific type of the first code scanning device 71 is not limited here. For example, the first code scanning device is a code scanning gun, a camera, etc.

The first code scanning device 71 is disposed on one side of the loading pull belt 9, which is conducive to performing code scanning on the batteries 200 passing through the code scanning area of the first code scanning device 71.

In this embodiment, the first code scanning device 71 is disposed to perform automatic code scanning on the batteries 200, which is helpful to identify and bind information of the batteries 200, so as to realize tracking record of the batteries 200 in a whole liquid injection process and improve the reliability of the liquid injection.

In some embodiments, please continue to refer to FIG. 1, the loading detection device 7 includes a second weighing device 72. The control equipment can control the second weighing device 72 to weigh batteries 200 passing through a weighing area of the second weighing device 72.

It should be noted that the specific structure of the second weighing device 72 is not limited here, as long as it can automatically weigh the batteries 200.

The second weighing device 72 is disposed on one side of the loading pull belt 9, which is conducive to weighing the batteries 200 passing through the weighing area of the second weighing device 72 to obtain the weight of the batteries 200 before liquid injection.

In this embodiment, the second weighing device 72 is disposed to automatically weigh the batteries 200, that is, the weight of the batteries 200 before liquid injection may be obtained, and then the batteries 200 after liquid injection are weighed by the first weighing device 61. The same battery 200 is weighed by the first weighing device 61 and the second weighing device 72, and the weight of the battery 200 after liquid injection weighed by the first weighing device 61 is subtracted from the weight of the battery 200 before liquid injection weighed by the second weighing device 72 to obtain the liquid injection amount of the battery 200, thereby confirming whether the liquid injection amount of the battery 200 meets the standard. If there is less liquid, the unqualified batteries 200 are transferred to the liquid replenishment buffer station 5. If there is more liquid, the unqualified batteries 200 are transferred to the unloading buffer pull belt 14. If the liquid injection amount meets the standard, the qualified batteries 200 are conveyed to the next process, thereby realizing automatic liquid replenishment of the batteries 200, improving reliability of liquid injection of the batteries 200 and increasing the yield rate of the batteries 200. In addition, automatic liquid replenishment of the batteries 200 can further be achieved, further improving the degree of automation of the liquid injection of the batteries 200.

In the related art, the batteries further need to undergo a baking process before liquid injection. After the batteries are baked, electrode plates become fluffy, and some batteries have internal short circuits. The batteries are not subjected to short-circuit testing before liquid injection, resulting in a problem of defective products flowing to the terminal. However, the batteries with the internal short circuits cannot be identified after liquid injection, so it is necessary to pick out batteries with the internal short circuits in advance before liquid injection.

In some embodiments, referring to FIG. 1, the loading detection device 7 includes a short-circuit testing device 73. The control equipment can control the short-circuit testing device 73 to perform short-circuit testing (Hi-pot, high potential) on batteries 200 passing through a testing area of the short-circuit testing device 73.

It should be noted that the specific structure of the short-circuit testing device 73 is not limited here, as long as it can automatically perform short-circuit testing on the batteries 200.

The short-circuit testing device 73 is disposed on one side of the loading pull belt 9, which is conducive to performing short-circuit testing on the batteries 200 passing through the testing area of the short-circuit testing device 73.

In this embodiment, the short-circuit testing device 73 is disposed to perform automatic short-circuit testing on the batteries 200, which is helpful to timely pick out batteries 200 with the problem of internal short circuit before liquid injection, improve a problem of defective products flowing to the terminal, and increase the yield rate of the batteries 200.

Exemplarily, the first code scanning device 71, the second weighing device 72 and the short-circuit testing device 73 are arranged in sequence in a conveying direction of the loading pull belt 9.

Of course, the first code scanning device 71 and the second weighing device 72 can further be disposed at the same station, that is, at the same station, the batteries 200 can be scanned by the first code scanning device 71 and weighed by the second weighing device 72.

In some embodiments, referring to FIG. 1, the liquid injection system 100 includes a loading buffer pull belt 12, and the control equipment can control the robot 8 to transfer batteries 200 that have been detected as unqualified by the loading detection device 7 to the loading buffer pull belt 12.

Exemplarily, the batteries 200 unqualified for the detection are, for example, products with poor code scanning or batteries 200 with the problem of the internal short circuit.

The loading buffer belt 12 may be disposed between the loading pull belt 9 and the unloading pull belt 11.

In this embodiment, the loading buffer pull belt 12 is disposed to buffer unqualified batteries 200. There is no need to stop a line for treatment, nor will it cause the problem of the defective products flowing to the terminal, which is conducive to improving the degree of automation and the production efficiency.

In some embodiments, please continue to refer to FIG. 1, the liquid injection system 100 includes a loading pairing station 13. The control equipment can control the robot 8 to transfer a battery pack that has been detected as unqualified by the loading detection device 7 to the loading pairing station 13, the unqualified battery pack includes at least one unqualified battery 200, and the control equipment can control the robot 8 to transfer the unqualified batteries 200 at the loading pairing station 13 to the loading buffer pull belt 12, and transfer qualified batteries 200 at the loading pairing station 13 to the loading and unloading station 4.

It is understandable that the robot 8 can transfer the plurality of batteries 200 each time, for example, 4, 5, 6, 7, 8, 9, 10, etc. Thus, the plurality of batteries can be grouped together, which is conducive for the robot 8 to grab and transfer.

In this embodiment, by disposing the loading pairing station 13, when the robot 8 grabs the batteries 200 and when there are unqualified batteries 200 in the battery pack, the robot 8 transfers the unqualified battery pack to the loading pairing station 13, and then puts the unqualified batteries 200 in the battery pack into the loading buffer pull belt 12. In a case where the entire battery pack is qualified, the entire battery pack is put in the liquid injection fixture 2. When the number of batteries 200 at the loading pairing station 13 meets the single-grabbing number of the robot 8, the robot 8 gives priority to grabbing the batteries 200 of the pairing mechanism and putting them in the liquid injection fixture 2, which is beneficial to vacating the loading pairing station 13 and is beneficial to improving the efficiency of the robot 8 in filling the liquid injection fixture 2.

Of course, in other embodiments, when there are unqualified batteries 200 in the battery pack, the robot 8 puts the unqualified batteries 200 in the battery pack onto the loading buffer pull belt 12, and transfers the qualified batteries 200 on the loading pairing station 13 to the loading and unloading station 4, without waiting until the number of batteries 200 on the loading pairing station 13 meets the single-grabbing number of the robot 8 before grabbing.

In some embodiments, please continue to refer to FIG. 1, the liquid injection system includes an unloading detection device 6, and the unloading detection device 6 includes a first weighing device 61 disposed on one side of the unloading pull belt 11 and a second code scanning device 62 disposed on one side of the unloading pull belt 11. The control equipment can control the second code scanning device 62 to perform code scanning on batteries 200 passing through a code scanning area of the second code scanning device 62.

It should be noted that the specific type of the second code scanning device 62 is not limited here. For example, the second code scanning device is a code scanning gun, a camera, etc.

The first weighing device 61 and the second code scanning device 62 are disposed on one side of the unloading pull belt 11, which is conducive to weighing the batteries 200 passing through the weighing area, and performing code scanning on the batteries 200 passing through the code scanning area of the second code scanning device 62.

In this embodiment, the second code scanning device 62 is disposed to perform automatic code scanning on the batteries 200 after liquid injection, which is helpful to identify and bind information of the batteries 200 after liquid injection, so as to realize tracking record of the batteries 200 in a whole liquid injection process and improve the reliability of the liquid injection.

In some embodiments, please continue to refer to FIG. 1, the liquid injection system 100 includes an unloading buffer pull belt 14, and the control equipment can control the robot 8 to transfer batteries 200 that have been detected as unqualified by the unloading detection device 6 to the unloading buffer pull belt 14.

The unloading detection device 6 is used to detect the batteries 200 after liquid injection.

Exemplarily, unqualified batteries 200 detected by the unloading detection device 6 are, for example, products with poor code scanning or batteries 200 with excess liquid after liquid injection.

In this embodiment, the unloading buffer pull belt 14 is disposed to buffer unqualified batteries 200 after liquid injection. There is no need to stop a line for treatment, nor will it cause the problem of the defective products flowing to the terminal, which is conducive to improving the degree of automation and the production efficiency.

In some embodiments, please continue to refer to FIG. 1, the liquid injection system 100 includes an unloading pairing station 15. The control equipment can control the robot 8 to transfer a battery pack that has been detected as unqualified by the unloading detection device 6 to the unloading pairing station 15, the unqualified battery pack includes at least one unqualified battery 200, and the control equipment can control the robot 8 to transfer the batteries 200 to be subjected to liquid replenishment from the unloading pairing station 15 to the liquid replenishment buffer station 5, transfer the unqualified batteries 200 except for the batteries to be subjected to liquid replenishment to the unloading buffer pull belt 14, and transfer qualified batteries 200 at the unloading pairing station 15 to the unloading pull belt 11.

In this embodiment, by disposing the unloading pairing station 15, when the robot 8 grabs the batteries 200 and one battery pack contains the unqualified batteries 200, the robot 8 transfers the unqualified battery pack to the unloading pairing station 15, transfers the batteries 200 to be subjected to liquid replenishment in the battery pack to the liquid replenishment buffer station 5, and then transfers the unqualified batteries 200 (for example, products with poor code scanning or batteries 200 with excess liquid after liquid injection) except for the batteries to be subjected to liquid replenishment in the battery pack to the unloading buffer pull belt 14. When the number of batteries 200 at the unloading pairing station 15 meets the single-grabbing number of the robot 8, the robot 8 gives priority to grabbing the batteries 200 at the unloading pairing station 15 and putting them in a unloading pull line, which is beneficial to vacating the unloading pairing station 15 and is beneficial to improving grabbing efficiency of the robot 8. When the number of batteries 200 at the liquid replenishment buffer station 5 meets the single-grabbing number of the robot 8, the robot 8 gives priority to grabbing the batteries 200 at the liquid replenishment buffer station 5 and putting them in the liquid injection fixture 2 at the battery placement positions 1a.

Of course, in other embodiments, when there are unqualified batteries 200 in the battery pack, the robot 8 puts the unqualified batteries 200 in the battery pack onto the unloading buffer pull belt 14, and transfers the qualified batteries 200 on the unloading pairing station 15 to an unloading pull line, without waiting until the number of batteries 200 on the unloading pairing station 15 meets the single-grabbing number of the robot 8 before grabbing. There is also no need to wait until the number of batteries 200 on the liquid replenishment buffer station 5 meets the single-grabbing number of the robot 8 before grabbing the batteries 200 on the liquid replenishment buffer station 5 and putting them in the liquid injection fixture 2 at the battery placement positions 1a.

In some implementations, please continue to refer to FIG. 1, the liquid injection system 100 includes a cleaning device 16 disposed on one side of the unloading pull belt 11, and the control equipment is able to control the cleaning device 16 to clean batteries 200 passing through a cleaning area of the cleaning device 16.

In this embodiment, by disposing the cleaning device 16 on one side of the unloading pull belt 11, after the liquid injection of the electrolyte solution is completed, the control equipment can control the cleaning device 16 to wipe a liquid injection port for the batteries 200 passing through the cleaning area of the cleaning device 16 to wipe off electrolyte solution residues outside the liquid injection port.

Of course, the cleaning device 16 can further clean other parts of the batteries 200 except for the liquid injection port.

In some embodiments, please continue to refer to FIG. 1, the liquid injection system 100 includes at least two rotary devices 1.

The fact that the liquid injection system 100 includes at least two rotary devices 1 means that the liquid injection system 100 includes a plurality of rotary devices 1. In the embodiment of the present disclosure, the liquid injection system 100 including two rotary devices 1 (which may include two turrets) is taken as an example for description.

Exemplarily, the fully automatic liquid injection system 100 of the embodiment of the present disclosure can achieve a maximum output of 16 PPM (16 products per minute) for a single machine.

In this embodiment, the liquid injection system 100 is provided with two rotary devices 1, which is beneficial to improving the liquid injection efficiency of the batteries 200. Moreover, the two rotary devices 1 may share the loading pull belt 9, the unloading pull belt 11 and the robot 8, which reduces the number of parts and reduces costs while improving the liquid injection efficiency.

In some embodiments, referring to FIG. 1, the liquid injection system 100 includes a residual liquid receiving mechanism 17 disposed on a circumferential outer side of the rotary device 1, and the control equipment can control the residual liquid receiving mechanism 17 to clean the electrolyte solution residual in the liquid injection cup of the liquid injection device.

For the convenience of explanation, a position where the battery placement positions 1a are located when the residual liquid can be cleaned is called a residual liquid receiving position. Each of the battery placement positions 1a sequentially passes through the feeding and discharging position 10a, the liquid preparation position 10b, at least one static buffer position 10c and the residual liquid receiving position 10d and returns to the feeding and discharging position 10a through rotational displacement. The control equipment controls the residual liquid receiving mechanism 17 to clean the electrolyte solution residual in the liquid injection cup of the liquid injection device for the battery placement positions 1a located at the residual liquid receiving position 10d.

In some specific embodiments, each battery placement position 1a may be configured such that when one of the battery placement positions 1a is located at the feeding and discharging position 10a, the other battery placement positions 1a are respectively located at the liquid preparation position 10b, the static buffer position 10c and the residual liquid receiving position 10d.

Here, by disposing the residual liquid receiving mechanism 17, the control equipment can control the residual liquid receiving mechanism 17 to clean the electrolyte solution residual in the liquid injection cup of the liquid injection device, which can improve the problem of inaccurate liquid injection amount of the next round of batteries 200 due to the electrolyte solution residual in the liquid injection cup. In addition, the residual liquid receiving mechanism 17 may also be used to contain the residual electrolyte solution, which can improve a problem of electrolyte solution dripping onto the outside of the residual liquid receiving mechanism 17, and is conducive to maintaining cleanliness and hygiene.

An embodiment of the present disclosure provides a liquid injection method, which is applied to a liquid injection system 100 for injecting a liquid into a battery 200. As shown in FIG. 1 to FIG. 2, the liquid injection system 100 includes control equipment, a rotary device 1, a liquid injection device, a liquid preparation mechanism 3, a loading and unloading station 4, a liquid replenishment buffer station 5, a transfer mechanism, a first weighing device 61 and a second weighing device 72.

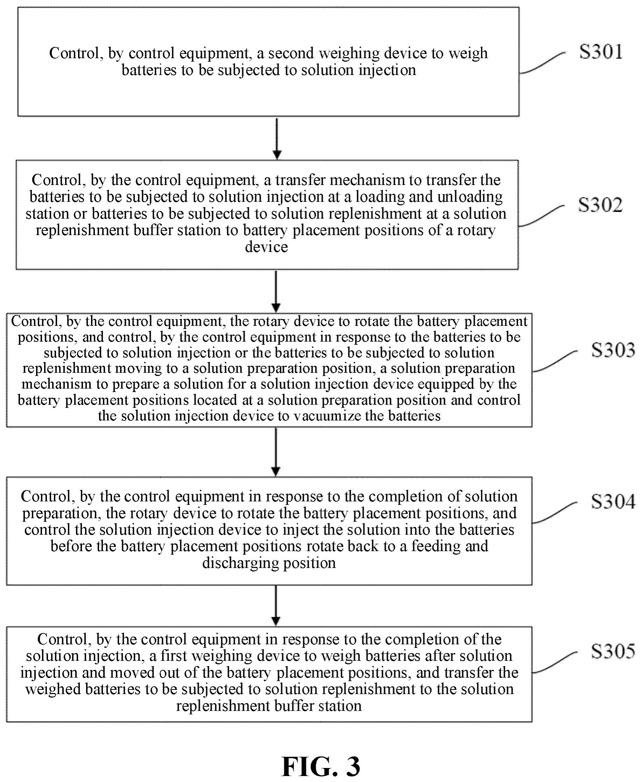

FIG. 3 is a schematic diagram of an implementation process of a liquid injection method provided by an embodiment of the present disclosure. As shown in FIG. 3, the liquid injection method includes the following step S301 to step S304:
step S301: the control equipment controls the second weighing device to weigh batteries to be subjected to liquid injection.

Step S302, the control equipment controls the transfer mechanism to transfer the batteries to be subjected to liquid injection at the loading and unloading station or batteries to be subjected to liquid replenishment at the liquid replenishment buffer station to the battery placement positions of the rotary device.

Here, the control equipment is used to control running processes of the rotary device 1, the liquid injection device, the liquid preparation mechanism 3, the transfer mechanism, the first weighing device 61, the second weighing device 72, etc. The control equipment may include, but is not limited to at least one of an industrial personal computer, a programmable logic controller (PLC), an upper computer, and the like. The upper computer may be, for example, a server, a laptop, a tablet computer, a desktop computer, a smart phone, etc.

Referring to FIG. 1, the loading and unloading station 4 is disposed on the circumferential outer side of the rotary device 1, and the loading and unloading station 4 is configured to place batteries 200 to be subjected to liquid injection and batteries 200 after liquid injection. The liquid replenishment buffer station 5 is configured to buffer batteries 200 to be subjected to liquid replenishment. The transfer mechanism is configured to move the batteries 200 after liquid injection on the battery placement positions 1a to the loading and unloading station 4, and to move the batteries 200 to be subjected to liquid injection from the loading and unloading station 4 to the battery placement positions 1a, or to move the batteries 200 to be subjected to liquid replenishment from the liquid replenishment buffer station 5 to the battery placement positions 1a.

Referring to FIG. 1, the rotary device 1 is provided with at least two battery placement positions 1a, all the battery placement positions 1a are disposed in the circumferential direction of the rotary device 1 at intervals, and the battery placement positions 1a are configured to install a liquid injection fixture 2 for accommodating the batteries 200, so as to perform steps such as vacuuming and still standing on the batteries 200 on the liquid injection fixture 2. All the battery placement positions 1a are disposed in the circumferential direction of the rotary device 1 at intervals. In this way, the rotary device 1 may drive the liquid injection fixture 2 in the battery placement positions 1a to turn in the circumferential direction of the rotary device 1 to realize the scheduling of the battery placement positions 1a, thereby performing different steps and finally completing the liquid injection.

The fact that the rotary device 1 is provided with at least two battery placement positions 1a means that the number of the battery placement positions 1a is two or more. Exemplarily, the number of the battery placement positions 1a may be 2, 3, 4, 5, 6, 7, 8, 9, 10, 11, 12 or 13, etc.

It should be noted that the "a plurality of" mentioned in the embodiments of the present disclosure refers to the number of two or more than two.

In some embodiments, referring to FIG. 1 and FIG. 2, the liquid injection system 100 includes a liquid injection fixture 2. The liquid injection fixture 2 is configured to accommodate the batteries 200 to be subjected to liquid injection or to be subjected to liquid replenishment, and the transfer mechanism is used to move the liquid injection fixture 2 accommodating the batteries 200 to be subjected to liquid injection or to be subjected to liquid replenishment to the battery placement positions 1a.

The liquid injection fixture 2 refers to a structure used to accommodate the batteries 200 and able to position the batteries 200. In a liquid injection process, a receiving tank 2a of the liquid injection fixture 2 is used to bear the batteries 200, and different mechanisms of the liquid injection system 100 perform different treatments on the batteries 200. The different batteries 200 may require different liquid injection fixtures 2. Therefore, for different types of batteries 200, different liquid injection fixtures 2 may be replaced to bear the batteries 200.

Exemplarily, the rotary device 1 (such as a turret) includes a mounting bracket, a turntable rotatably disposed on the mounting bracket, and a driving member for driving the turntable to rotate.

Here, the turntable is driven by the driving member to rotate horizontally, and a rotation direction of the turntable may be counterclockwise or clockwise. The turntable is driven to rotate by the driving member, so that the battery placement positions 1a rotate.

Exemplarily, the driving member is, for example, a motor.

Step S303, the control equipment controls the rotary device to rotate the battery placement positions, and in response to the batteries to be subjected to liquid injection or the batteries to be subjected to liquid replenishment moving to the liquid preparation position, the control equipment controls the liquid preparation mechanism to prepare a liquid for the liquid injection device equipped by the battery placement positions located at the liquid preparation position and controlling the liquid injection device to vacuumize the batteries.

Exemplarily, the control equipment controls the driving member of the rotary device to drive the turntable to rotate, and as the turntable rotates, the battery placement positions 1a rotate.

Exemplarily, each battery placement position 1a is provided with a corresponding liquid injection device, and the liquid injection device is used to inject the liquid into the battery 200 on the corresponding battery placement position 1a.

The liquid preparation mechanism 3 is configured to prepare the liquid for the liquid injection device passing through the liquid preparation area of the liquid preparation mechanism 3. Exemplarily, the control equipment controls the battery placement position 1a where the batteries 200 to be subjected to liquid injection are placed to rotate to the liquid preparation position. The control equipment controls the liquid preparation mechanism 3 to inject a certain amount of electrolyte solution into a liquid injection cup of the liquid injection device, and the liquid injection cup is used to inject the liquid into the batteries 200.

Here, while the control equipment controls the liquid preparation mechanism 3 to prepare the liquid for the liquid injection device (at this time, the battery placement positions 1a are located at the liquid preparation position) located in the liquid preparation area, the control equipment can further control the liquid injection device to vacuumize the batteries 200.

Step S304, in response to the completion of liquid preparation, the control equipment controls the rotary device to rotate the battery placement positions 1a, and controls the liquid injection device to inject the liquid into the batteries before the battery placement positions 1a rotate back to the feeding and discharging position 10a.

In this way, the liquid injection can be completed during the period when the battery placement positions 1a rotate from the feeding and discharging position 10a back to the feeding and discharging position 10a. For example, liquid injection can be completed at the liquid preparation position, or, liquid preparation can be completed after liquid preparation during a period of rotating through the static buffer position. By disposing at least two battery placement positions 1a, while the loading and unloading station 4 performs feeding and discharging, liquid preparation, vacuuming and still standing of the batteries 200, the liquid injection devices located on the remaining battery placement positions 1a may inject the liquid into the batteries 200, for example, perform cyclic liquid injection on the batteries 200 by utilizing positive and negative pressures, which is conducive to the full absorption of the electrolyte solution, saving time and improving the production efficiency.

Step S305, in response to the completion of the liquid injection, the control equipment controls the first weighing device 61 to weigh batteries after liquid injection and moved out of the battery placement positions 1a, and transfer the weighed batteries to be subjected to liquid replenishment to the liquid replenishment buffer station.

Optionally, the unloading detection device 6 is used to detect the batteries 200 after liquid injection to detect whether the batteries 200 are qualified.

Please refer to FIG. 1, the unloading detection device 6 may include a first weighing device 61, the first weighing device 61 is configured to weigh the batteries 200 after liquid injection, so as to confirm whether the liquid injection amount of the batteries 200 meets the standard. If there is less liquid, the unqualified batteries 200 are transferred to the liquid replenishment buffer station 5. If there is more liquid, the unqualified batteries 200 are transferred to the unloading buffer pull belt 14. If the liquid injection amount meets the standard, the qualified batteries 200 are conveyed to the next process, thereby realizing automatic liquid replenishment of the batteries 200.

It should be noted that the specific structure of the first weighing device 61 is not limited here, as long as it can automatically weigh the batteries 200.

In some embodiments, step S305 may include: in response to the completion of liquid injection, the control equipment controls the first weighing device 61 to weigh the batteries after liquid injection and moved out of the battery placement positions 1a; based on a difference value between the weight of the batteries weighed by the first weighing device 61 and the weight of the batteries weighed by the second weighing device, whether the liquid injection amount of the batteries 200 meets the standard is confirmed; if there is less liquid, the unqualified batteries 200 are transferred to the liquid replenishment buffer station 5; if there is more liquid, the unqualified batteries 200 are transferred to the unloading buffer pull belt 14; and if the liquid injection amount meets the standard, the qualified batteries 200 are conveyed to the next process for subsequent treatment.

According to the liquid injection method of the embodiment of the present disclosure, on the one hand, the control equipment controls the transfer mechanism to move the batteries 200 to be subjected to liquid injection from the loading and unloading station 4 to the battery placement positions 1a or move the batteries 200 to be subjected to liquid replenishment from the liquid replenishment buffer station 5 to the battery placement positions 1a, then controls the rotary device 1 to rotate the battery placement positions carrying the batteries, and controls the liquid preparation mechanism 3 to prepare the liquid for the liquid injection device to realize automatic liquid preparation. After the automatic liquid preparation is completed, the liquid injection device is controlled to perform liquid injection on the batteries 200 at the battery placement positions 1a before the batteries return from the battery placement positions 1a to the feeding and discharging position 10a, thereby realizing fully-automatic liquid injection of the batteries 200, improving a degree of automation of liquid injection of the batteries 200, improving production efficiency, and reducing labor cost. On the other hand, by disposing the first weighing device 61 for weighing the batteries 200 after liquid injection, and transferring the weighed batteries 200 to be subjected to liquid replenishment to the liquid replenishment buffer station 5, thus automatic liquid replenishment of the batteries 200 may further be achieved while increasing a yield rate, thereby further improving the degree of automation of liquid injection of the batteries 200.

In some embodiments, referring to FIG. 1, the liquid injection system 100 includes a loading pull belt 9, a loading buffer pull belt 12, and a loading detection device 7 disposed on one side of the loading pull belt 9.

The liquid injection method includes the following step S321 to step S322:
step S321, the control equipment controls the loading pull belt to convey the batteries to be subjected to liquid injection.
Step S322, the control equipment controls the loading detection device to detect batteries passing through a detection area of the loading detection device, transfer batteries qualified for detection to the loading and unloading station, and transfer batteries unqualified for detection to the loading buffer pull belt.

After step S321 and step S322, step S302 is performed, the control equipment controls the transfer mechanism to transfer the batteries to be subjected to liquid injection at the loading and unloading station or batteries to be subjected to liquid replenishment at the liquid replenishment buffer station to the battery placement positions of the rotary device.

Here, the loading pull belt 9 is used to load the batteries 200. Exemplarily, the loading pull belt 9 includes a first end and a second end in a conveying direction. The first end of the loading pull belt 9 is a feeding end, and the second end of the loading pull belt 9 is the taking position 9a. The batteries 200 to be subjected to liquid injection enter from the feeding end, and the loading pull belt 9 conveys the batteries 200 to be subjected to liquid injection to the taking position 9a.

The robot 8 transfers the qualified batteries 200 at the taking position 9a to the loading and unloading station 4, for example, transferring the qualified batteries 200 at the taking position 9a to the liquid injection fixture 2 on the loading and unloading station 4. The robot transfers the batteries 200 after liquid injection on the loading and unloading station 4 to the unloading position 11a, for example, transferring the batteries 200 after liquid injection on the loading and unloading station 4 to the liquid injection fixture 2 on the unloading position 11a.

In some embodiments, referring to FIG. 1, the liquid injection system 100 includes a loading detection device 7 disposed on one side of the loading pull belt 9. The control equipment can control the loading detection device 7 to detect the batteries 200 passing through a detection area of the loading detection device 7.

In this embodiment, the loading detection device 7 is disposed to detect the batteries 200 passing through the detection area of the loading detection device 7, which is helpful to timely find out whether the batteries 200 to be subjected to liquid injection are qualified, thereby improving the production efficiency of the batteries 200.

In some embodiments, referring to FIG. 1, the liquid injection system 100 includes a loading buffer pull belt 12, and the control equipment can control the robot 8 to transfer batteries 200 that have been detected as unqualified by the loading detection device 7 to the loading buffer pull belt 12.

Exemplarily, the batteries 200 unqualified for the detection are, for example, products with poor code scanning or batteries 200 with the problem of the internal short circuit.

In this embodiment, the loading buffer pull belt 12 is disposed to buffer unqualified batteries 200. There is no need to stop a line for treatment, nor will it cause the problem of the defective products flowing to the terminal, which is conducive to improving the degree of automation and the production efficiency.

In some embodiments, referring to FIG. 1, the liquid injection system 100 includes a loading pairing station 13.

Transferring the batteries 200 qualified for detection to the feeding and discharging station 4 (step S3221), and transferring the batteries 200 unqualified for detection to the loading buffer pull belt 12 (step S3222) may include the following steps:
the control equipment transfers battery packs qualified for the detection to the loading and unloading station 4 (step S3221), and transfers battery packs unqualified for the detection to the loading pairing station 13 (step S3222a), wherein the unqualified battery packs include at least one unqualified battery 200; and
the control equipment transfers the batteries 200 unqualified for the detection at the loading pairing station 13 to the loading buffer pull belt 12 (step S3222b), and if the number of the batteries 200 qualified for the detection at the loading pairing station 13 reaches the preset number, the control equipment transfers the preset number of batteries 200 to the loading and unloading station 4 (step S3222c).

It is understandable that the robot 8 can transfer the plurality of batteries 200 each time, for example, 4, 5, 6, 7, 8, 9, 10, etc. Thus, the plurality of batteries can be grouped together, which is conducive for the robot 8 to grab and transfer.

In this embodiment, by disposing the loading pairing station 13, when the robot 8 grabs the batteries 200 and when there are unqualified batteries 200 in the battery pack, the robot 8 transfers the unqualified battery pack to the loading pairing station 13, and then puts the unqualified batteries 200 in the battery pack into the loading buffer pull belt 12. In a case where the entire battery pack is qualified, the entire battery pack is put in the liquid injection fixture 2. When the number of batteries 200 at the loading pairing station 13 meets the single-grabbing number of the robot 8, the robot 8 gives priority to grabbing the batteries 200 of the pairing mechanism and putting them in the liquid injection fixture 2, which is beneficial to vacating the loading pairing station 13 and is beneficial to improving the efficiency of the robot 8 in filling the liquid injection fixture 2.

Of course, in other embodiments, when there are defective products, the robot 8 puts the unqualified batteries 200 in the battery pack onto the loading buffer pull belt 12, and transfers the qualified batteries 200 on the loading pairing station 13 to the loading and unloading station 4, without waiting until the number of batteries 200 on the loading pairing station 13 meets the single-grabbing number of the robot 8 before grabbing.

In some implementations, referring to FIG. 1, controlling, by the control equipment, the loading detection device 7 to detect the batteries 200 passing through the detection area of the loading detection device 7 includes:
the loading detection device 7 includes a first code scanning device 71. The control equipment can control the first code scanning device 71 to perform code scanning on batteries 200 passing through a code scanning area of the first code scanning device 71.

It should be noted that the specific type of the first code scanning device 71 is not limited here. For example, the first code scanning device is a code scanning gun, a camera, etc.

The first code scanning device 71 is disposed on one side of the loading pull belt 9, which is conducive to performing code scanning on the batteries 200 passing through the code scanning area of the first code scanning device 71.

In this embodiment, the first code scanning device 71 is disposed to perform automatic code scanning on the batteries 200, which is helpful to identify and bind information of the batteries 200, so as to realize tracking record of the batteries 200 in a whole liquid injection process and improve the reliability of the liquid injection.

In some embodiments, referring to FIG. 1, the loading detection device 7 includes a second weighing device 72. The control equipment can control the second weighing device 72 to weigh batteries 200 passing through a weighing area of the second weighing device 72.

It should be noted that the specific structure of the second weighing device 72 is not limited here, as long as it can automatically weigh the batteries 200.

The second weighing device 72 is disposed on one side of the loading pull belt 9, which is conducive to weighing the batteries 200 passing through the weighing area of the second weighing device 72 to obtain the weight of the batteries 200 before liquid injection.

In this embodiment, the second weighing device 72 is disposed to automatically weigh the batteries 200, that is, the weight of the batteries 200 before liquid injection may be obtained, and then the batteries 200 after liquid injection are weighed by the first weighing device 61. The same battery 200 is weighed by the first weighing device 61 and the second weighing device 72, and the weight of the battery 200 after liquid injection weighed by the first weighing device 61 is subtracted from the weight of the battery 200 before liquid injection weighed by the second weighing device 72 to obtain the liquid injection amount of the battery 200, thereby confirming whether the liquid injection amount of the battery 200 meets the standard. If there is less liquid, the unqualified batteries 200 are transferred to the liquid replenishment buffer station 5. If there is more liquid, the unqualified batteries 200 are transferred to the unloading buffer pull belt 14. If the liquid injection amount meets the standard, the qualified batteries 200 are conveyed to the next process, thereby realizing automatic liquid replenishment of the batteries 200, improving reliability of liquid injection of the batteries 200 and increasing the yield rate of the batteries 200. In addition, automatic liquid replenishment of the batteries 200 can further be achieved, further improving the degree of automation of the liquid injection of the batteries 200.

In the related art, the batteries further need to undergo a baking process before liquid injection. After the batteries are baked, electrode plates become fluffy, and some batteries have internal short circuits. The batteries are not subjected to short-circuit testing before liquid injection, resulting in a problem of defective products flowing to the terminal. However, the batteries with the internal short circuits cannot be identified after liquid injection, so it is necessary to pick out batteries with the internal short circuits in advance before liquid injection.

In some embodiments, referring to FIG. 1, the loading detection device 7 includes a short-circuit testing device 73. The control equipment can control the short-circuit testing device 73 to perform short-circuit testing (Hi-pot, high potential) on batteries 200 passing through a testing area of the short-circuit testing device 73.

It should be noted that the specific structure of the short-circuit testing device 73 is not limited here, as long as it can automatically perform short-circuit testing on the batteries 200.

The short-circuit testing device 73 is disposed on one side of the loading pull belt 9, which is conducive to performing short-circuit testing on the batteries 200 passing through the testing area of the short-circuit testing device 73.

In this embodiment, the short-circuit testing device 73 is disposed to perform automatic short-circuit testing on the batteries 200, which is helpful to timely pick out batteries 200 with the problem of internal short circuit before liquid injection, improve a problem of defective products flowing to the terminal, and increase the yield rate of the batteries 200.

Exemplarily, the first code scanning device 71, the second weighing device 72 and the short-circuit testing device 73 are arranged in sequence in a conveying direction of the loading pull belt 9.

Of course, the first code scanning device 71 and the second weighing device 72 can further be disposed at the same station, that is, at the same station, the batteries 200 can be scanned by the first code scanning device 71 and weighed by the second weighing device 72.

The following is an implementation process of a liquid injection method provided by the embodiment of the present disclosure, and the liquid injection method includes the following step S801 to step S816:
Step S801, a loading pull belt conveys batteries to be subjected to liquid injection.
Step S802, code scanning and weighing are performed on the batteries to be subjected to liquid injection, and whether the batteries to be subjected to liquid injection are qualified is judged.

If not, step S803 is performed; if yes, step S804 is performed.

Step S803, unqualified batteries are transferred to the loading buffer pull belt for manual treatment.

Step S804, Hi-pot testing is performed on the batteries to be subjected to liquid injection, and whether the batteries to be subjected to liquid injection are qualified is judged.

If not, step S803 is performed; if yes, step S805 is performed.

Step S805, the batteries are transferred into a liquid injection fixture of a loading and unloading station.

S806, control equipment controls a transfer mechanism to transfer the liquid injection fixture of the loading and unloading station to a rotary device.

Step S807: the control equipment controls a liquid preparation mechanism to prepare a liquid for a liquid injection device located in a liquid preparation area.

Step S808: the control equipment controls the liquid injection device to vacuumize the batteries.

Wherein step S807 and step S808 may be performed simultaneously.

Step S809: the control equipment controls the liquid injection device to inject the liquid to the batteries.

The liquid is injected to the batteries cyclically by positive and negative pressures.

Step S810: the control equipment controls a residual liquid receiving mechanism to inject the liquid to the batteries.

Step S811, the control equipment controls the transfer mechanism to transfer the liquid injection fixture on the rotary device to the loading and unloading station.

Step S812, the batteries after liquid injection in the liquid injection fixture are transferred to an unloading pull belt.

Step S813, code scanning and weighing are performed on the batteries after liquid injection, and whether the batteries to be subjected to liquid injection are qualified is judged.

If not, step S814 is performed; if yes, step S815 is performed.

Step S814, the unqualified batteries are transferred to a liquid replenishment buffer station for automatic liquid replenishment.

If the batteries are still unqualified after multiple liquid replenishment, the unqualified batteries are transferred to an unloading buffer pull belt for manual treatment.

Step S815: the control equipment controls a clean device to clean the batteries.

Step S816, the unloading pull belt conveys the batteries after liquid injection.

In the description of the present disclosure, descriptions referring to terms such as "in an embodiment," "in some embodiments," "in some other embodiments," "in yet other embodiments," or "exemplary" are intended to indicate that specific features, structures, materials, or characteristics described in connection with that embodiment or example are included in at least one embodiment or example of the embodiments of the present disclosure. In the present disclosure, the illustrative representations of the aforementioned terms are not necessarily directed to the same embodiment or example. Moreover, the specific features, structures, materials, or characteristics described may be combined in any one or more embodiments or examples in a suitable manner. In addition, those skilled in the art may combine various embodiments or examples described in the present disclosure and features of the various embodiments or examples provided they are not contradictory to each other.

The above is only the preferred embodiment of the present disclosure, and is not intended to limit the present disclosure. For those skilled in the art, the present disclosure can have various changes and variations. Any modification, equivalent substitution, improvement and the like made within the spirit and principle of the present disclosure shall all be contained in the scope of protection of the present disclosure.

## Claims

1. A liquid injection system for injecting a liquid into a battery, comprising:
a rotary device, provided with a plurality of battery placement positions arranged in a circumferential direction and able to achieve rotational displacement, wherein the battery placement positions are used to place batteries, and each of the battery placement positions sequentially passes through a feeding and discharging position, a liquid preparation position, and at least one static buffer position and returns to the feeding and discharging position through rotational displacement;
a liquid injection device, wherein each of the battery placement positions is equipped with the liquid injection device, and the liquid injection device is configured to inject a liquid into the batteries placed at the battery placement positions;
a liquid preparation mechanism, disposed on a circumferential outer side of the rotary device, wherein the liquid preparation mechanism is configured to prepare a liquid for the liquid injection device equipped at the battery placement position located at the liquid preparation position;
a loading and unloading station, disposed on the circumferential outer side of the rotary device, wherein the loading and unloading station is configured to place batteries to be subjected to liquid injection and batteries after liquid injection;
a liquid replenishment buffer station, configured to buffer batteries to be subjected to liquid replenishment;
a transfer mechanism, configured to move the batteries after liquid injection from the battery placement positions located at the feeding and discharging position to the loading and unloading station, and to move the batteries to be subjected to liquid injection from the loading and unloading station to the battery placement positions located at the feeding and discharging position, or to move the batteries to be subjected to liquid replenishment from the liquid replenishment buffer station to the battery placement positions located at the feeding and discharging position;
a first weighing device, configured to weigh the batteries after liquid injection;
a second weighing device, configured to weigh the batteries to be subjected to liquid injection; and
control equipment, configured to control the second weighing device to weigh the batteries to be subjected to liquid injection, then control the transfer mechanism to move the batteries to be subjected to liquid injection located at the loading and unloading station to the battery placement positions located at the feeding and discharging position, control the rotary device to make the battery placement positions be in rotational displacement, control the liquid preparation mechanism to prepare a liquid for the liquid injection devices equipped at the battery placement positions that are displaced to the liquid preparation positions, control the liquid injection device after liquid preparation to inject a liquid to the batteries at the battery placement positions before the battery placement positions rotate back to the feeding and discharging position, control the transfer mechanism to move the batteries after liquid injection that rotate back to the feeding and discharging position from the battery placement positions to the loading and unloading station, then control the first weighing device to weigh the batteries after liquid injection, and further control, after weighing and after the batteries to be subjected to liquid replenishment are transferred to the liquid replenishment buffer station, the transfer mechanism to move the batteries to be subjected to liquid replenishment from the liquid replenishment buffer station to the battery placement positions located at the feeding and discharging position and having no batteries being placed.

2. The liquid injection system according to claim 1, wherein
the liquid injection system comprises a loading detection device, the control equipment controls the loading detection device to detect batteries passing through a detection area of the loading detection device, the loading detection device comprises a second weighing device, the second weighing device is configured to weigh batteries to be subjected to liquid injection that pass through a weighing area of the second weighing device, and
for the same battery, in a case where a difference value between the weight of the battery after liquid injection weighed by the first weighing device and the weight of the battery to be subjected to liquid injection weighed by the second weighing device does not reach a specified amount, the control equipment controls a robot to transfer the battery to the liquid replenishment buffer station.

3. The liquid injection system according to claim 2, wherein
the liquid injection system comprises the robot, a loading pull belt with a taking position, and an unloading pull belt with an unloading position, the loading detection device is disposed on one side of the loading pull belt, and the control equipment controls the robot to transfer qualified batteries from the taking position to the loading and unloading station, and transfer the batteries after liquid injection from the loading and unloading station to the unloading position.

4. The liquid injection system according to claim 3, wherein
the loading detection device further comprises a first code scanning device, and the control equipment controls the first code scanning device to perform code scanning on batteries passing through a code scanning area of the first code scanning device.

5. The liquid injection system according to claim 3 or 4, wherein
the loading detection device further comprises a short-circuit testing device, and the control equipment controls the short-circuit testing device to perform short-circuit testing on batteries passing through a short-circuit testing area of the short-circuit testing device.

6. The liquid injection system according to any one of claims 3 to 5, wherein
the liquid injection system comprises a loading buffer pull belt, and the control equipment controls the robot to transfer batteries that have been detected as unqualified by the loading detection device to the loading buffer pull belt.

7. The liquid injection system according to claim 6, wherein
the liquid injection system comprises a loading pairing station, the control equipment controls the robot to transfer a battery pack that has been detected as unqualified by the loading detection device to the loading pairing station, the unqualified battery pack comprises at least one unqualified battery, and the control equipment controls the robot to transfer the unqualified batteries at the loading pairing station to the loading buffer pull belt, and transfer qualified batteries at the loading pairing station to the loading and unloading station.

8. The liquid injection system according to any one of claims 3 to 7, wherein
the liquid injection system comprises an unloading detection device, the unloading detection device comprises a first weighing device disposed on one side of the unloading pull belt and a second code scanning device disposed on one side of the unloading pull belt, and the control equipment controls the second code scanning device to scan the batteries passing through a code scanning area of the second code scanning device.

9. The liquid injection system according to any one of claims 3 to 8, wherein
the liquid injection system comprises an unloading buffer pull belt, and the control equipment controls the robot to transfer batteries that have been detected as unqualified by the unloading detection device to the unloading buffer pull belt.

10. The liquid injection system according to claim 9, wherein
the liquid injection system comprises an unloading pairing station, the control equipment controls the robot to transfer a battery pack that has been detected as unqualified by the unloading detection device to the unloading pairing station, the unqualified battery pack comprises at least one unqualified battery, and the control equipment controls the robot to transfer the batteries to be subjected to liquid replenishment from the unloading pairing station to the liquid replenishment buffer station, transfer the unqualified batteries except for the batteries to be subjected to liquid replenishment to the unloading buffer pull belt, and transfer qualified batteries at the unloading pairing station to the unloading pull belt.

11. The liquid injection system according to any one of claims 3 to 10, wherein
the liquid injection system comprises a cleaning device disposed on one side of the unloading pull belt, and the control equipment is able to control the cleaning device to clean batteries passing through a cleaning area of the cleaning device.

12. The liquid injection system according to any one of claims 1 to 11, wherein
the liquid injection system comprises a liquid injection fixture, the liquid injection fixture is configured to accommodate the batteries to be subjected to liquid injection or the batteries to be subjected to liquid replenishment or the batteries after liquid injection, and the transfer mechanism is used to move the liquid injection fixture accommodating the batteries to be subjected to liquid injection or to be subjected to liquid replenishment from the loading and unloading station to the battery placement positions, or to move the liquid injection fixture accommodating the batteries after liquid injection from the battery placement positions to the loading and unloading station.

13. The liquid injection system according to any one of claims 1 to 12, wherein
the liquid injection system comprises at least two rotary devices; and/or,
the rotary device comprises at least two static buffer positions, and all the static buffer positions are disposed in a circumferential direction of the rotary device at intervals.

14. The liquid injection system according to any one of claims 1 to 13, wherein
the liquid injection system comprises a residual liquid receiving mechanism disposed on a circumferential outer side of the rotary device,
each of the battery placement positions sequentially passes through the feeding and discharging position, the liquid preparation position, at least one static buffer position and a residual liquid receiving position and returns to the feeding and discharging position through rotational displacement; and
the control equipment controls the residual liquid receiving mechanism to clean an electrolyte solution residual in a liquid injection cup of the liquid injection device for the battery placement positions located at the residual liquid receiving position.

15. The liquid injection system according to any one of claims 1 to 14, wherein
the liquid injection system comprises at least two rotary devices, and the liquid replenishment buffer station is disposed between the at least two rotary devices.

16. The liquid injection system according to any one of claims 3 to 11, wherein
the liquid injection system comprises at least two rotary devices, and the robot is located between the at least two rotary devices and located between the liquid replenishment buffer station and the unloading pull belt; and an arrangement direction of the loading pull belt and the unloading pull belt is the same as an arrangement direction of at least two rotary devices, and the loading pull belt and the unloading pull belt are located on the same side of the at least two rotary devices.

17. A liquid injection method, applied to a liquid injection system for injecting a liquid to a battery, wherein the liquid injection system comprises control equipment, a rotary device, a liquid injection device, a liquid preparation mechanism, a loading and unloading station, a liquid replenishment buffer station, a transfer mechanism, a first weighing device and a second weighing device, the rotary device is provided with a plurality of static station battery placement positions arranged in a circumferential direction and able to achieve rotational displacement, the battery placement positions are used to place batteries, each of the battery placement positions sequentially passes through a feeding and discharging position, a liquid preparation position, at least one static buffer position and returns to the feeding and discharging position through rotational displacement, and the liquid injection method comprises:
controlling, by the control equipment, the second weighing device to weigh batteries to be subjected to liquid injection;
controlling, by the control equipment, the transfer mechanism to transfer the batteries to be subjected to liquid injection at the loading and unloading station or batteries to be subjected to liquid replenishment at the liquid replenishment buffer station to the battery placement positions of the rotary device;
controlling, by the control equipment, the rotary device to rotate the battery placement positions, and controlling, by the control equipment in response to the batteries to be subjected to liquid injection or the batteries to be subjected to liquid replenishment moving to the liquid preparation position, the liquid preparation mechanism to prepare a liquid for the liquid injection device equipped by the battery placement positions located at the liquid preparation position and controlling the liquid injection device to vacuumize the batteries;
controlling, by the control equipment in response to the completion of liquid preparation, the rotary device to rotate the battery placement positions, and controlling the liquid injection device to inject the liquid into the batteries before the battery placement positions rotate back to the feeding and discharging position; and
controlling, by the control equipment in response to the completion of the liquid injection, the first weighing device to weigh batteries after liquid injection and moved out of the battery placement positions, and transfer the weighed batteries to be subjected to liquid replenishment to the liquid replenishment buffer station.

18. The liquid injection method according to claim 17, wherein
the liquid injection system comprises a loading pull belt, a loading buffer pull belt and a loading detection device disposed on one side of the loading pull belt, and before controlling, by the control equipment, the transfer mechanism to transfer the batteries to be subjected to liquid injection at the loading and unloading station or the batteries to be subjected to liquid replenishment at the liquid replenishment buffer station to the battery placement positions of the rotary device, the method comprises:
controlling, by the control equipment, the loading pull belt to convey the batteries to be subjected to liquid injection; and
controlling, by the control equipment, the loading detection device to detect batteries passing through a detection area of the loading detection device, transfer batteries qualified for detection to the loading and unloading station, and transfer batteries unqualified for detection to the loading buffer pull belt.

19. The liquid injection method according to claim 18, wherein
the liquid injection system comprises a loading pairing station, and transferring the batteries qualified for the detection to the loading and unloading station, and transferring the batteries unqualified for the detection to the loading buffer pull belt comprises:
transferring, by the control equipment, battery packs qualified for the detection to the loading and unloading station, and transferring battery packs unqualified for the detection to the loading pairing station, wherein the unqualified battery packs comprise at least one unqualified battery; and
transferring, by the control equipment, the batteries unqualified for the detection at the loading pairing station to the loading buffer pull belt, and transferring, by the control equipment if the number of the batteries qualified for the detection at the loading pairing station reaches the preset number, the preset number of batteries to the loading and unloading station.

20. The liquid injection method according to claim 18 or 19, wherein
controlling, by the control equipment, the loading detection device to detect the batteries passing through the detection area of the loading detection device comprises:
the loading detection device comprising a second weighing device, and controlling, by the control equipment, the second weighing device to weigh batteries passing through a weighing area of the second weighing device; and/or
the loading detection device comprising a short-circuit testing device, and controlling, by the control equipment, the short-circuit testing device to perform short-circuit testing on batteries passing through a short-circuit testing area of the short-circuit testing device; and/or
the loading detection device comprising a first code scanning device, and controlling, by the control equipment, the first code scanning device to perform code scanning on batteries passing through a code scanning area of the first code scanning device.
